# EUROPEAN PATENT APPLICATION

(11) **EP 1 155 905 A1**
(43) Date of publication of application: **21.11.2001**
(21) Application number: 01660096.7
(22) Date of filing: 14.05.2001
(51) Int. Cl.: B60P 1/64

(54) **Assembly for transferring a body**

(30) Priority: 15.05.2000 FI 20001154
(71) Applicant: MULTILIFT OY, SF-21201 Raisio (FI)
(72) Inventor: Mylläri, Esa, 20300 Turku (FI)
(74) Representative: Pelin, Torolf

(57) **Abstract**

An assembly for transferring a body (13) to and from a vehicle, the assembly comprising an L-shaped part (6), in which the upper end of the vertical arm (10) comprises a gripping hook (11) and the rear end of the horizontal arm (7) or its extension (4) comprises a transverse pivoted axle (3), about which the L-shaped part is rotatable by means of an actuator (8). A double-ended gripping hook (11) has been fastened to the end of the vertical arm (10) of the L-shaped part (6) so as to allow the same loading assembly to be used for transferring different bodies (13).

## Description

This invention relates to an assembly for transferring a body to and from a vehicle, the assembly comprising an L-shaped part, whose vertical arm comprises a gripping hook at the upper end and whose horizontal arm or its extension comprises a transverse pivoted axle at the rear end, the L-shaped part being rotatable about the pivoted axle by means of an actuator.

Various loading devices are known which comprise an L-shaped part, whose vertical branch comprises a gripping hook at its upper end for engaging the gripping loop of the body. Such devices are described in FI 63350 and FR 2, 109,109, for instance.

Hook devices are also known in which the gripping hook is allowed to rotate about its transverse axis relative to the vertical arm of the L-body, so that the gripping hook locks the gripping loop as it rotates. Such devices are described in the same applicant's patents FI 86977 and FI 91509.

FR Patent Application 2, 397,304 discloses a loading device, in which the gripping hook is fastened to the upper end of the L-body by means of two transverse pins. One of these pins is removable. When this pin is removed, the gripping hook is allowed to turn backwards, so that the gripping hook can be removed from the platform, which is raised into horizontal position and supported by the legs.

However, in platforms used in different countries, the gripping arc by which the gripping hook grips the platform, is located at different heights in the front wall of the platform. The prior art hook device (FI 86977) mentioned above is not suitable as such for handling two platforms in which the gripping arcs are at different heights. If the assembly is used for handling a platform whose gripping arc is located in a higher position than the height for which the assembly is actually intended, the hook part will be hanging too low relative to the handled platform at some stage of the handling. Then the lower edge of the platform hits the intermediate frame of the assembly. During tipping as well, the platform is not maintained in the correct tipping position if the gripping arc of the platform is located too high relative to the hook position.

When the prior art hook device (FI 91509) is used, the vertical adjustment can be adapted to the heights of gripping arcs of different standards within certain limits by removing or using a transverse stop pin in the body portion of the hook. Nevertheless, this method allows for a very short reach range.

The object of the present invention is to eliminate the problem caused by two gripping arcs that may be very different and located at different heights. The assembly of the invention is characterised by the fact that a double-ended gripping hook is fastened to the end of the vertical arm of the L-shaped part by means of a locking part, so as to allow the same loading assembly to be used for transferring different bodies, as described below in the claims. The solution of the invention is very simple and easy to implement, and also provides ease of use and reliable operation.

The invention is explained in detail below with reference to the accompanying drawings, in which
- figure 1: shows the assembly of the invention in different positions,
- figure 2: shows the upper part of the L-body and the double-ended gripping hook, which has been fastened eccentrically, in its two operating positions,
- figure 3: shows the upper part of the L-body and the gripping hook having two shaped ends, in its two operating positions,
- figure 4: shows the upper part of the L-body and the double-ended gripping hook part, which has been eccentrically fastened and whose ends are shaped, in its two operating positions and
- figure 5: shows the upper part of the L-body and the eccentrically fastened double-ended gripping hook part, which has been fastened by means of a shaft aligned with the longitudinal axis of the vehicle, in its two operating positions.

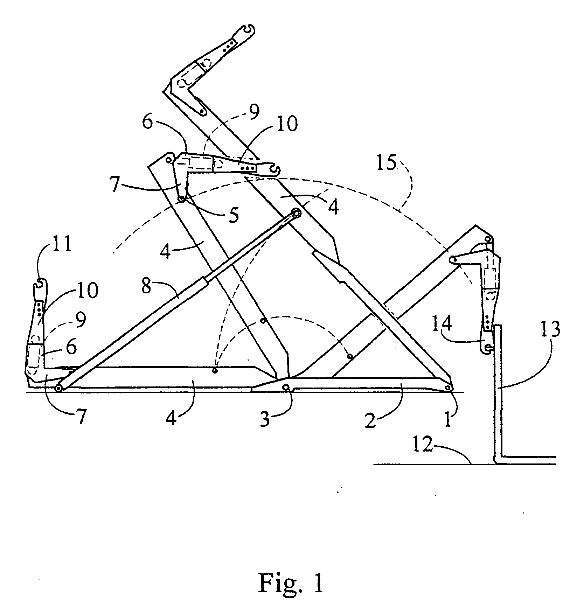

Figure 1 shows the loading assembly in different positions. The actual loading device is known *per se,* for instance such as described in FI 63350. The loading assembly comprises a rear frame 2 rotating about the rearmost transverse articulated shaft 1, a central frame 4 fastened rotatably about a transverse articulated shaft 3, to the leading end of the rear frame, and an L-shaped part 6 fastened rotatably about the transverse articulated shaft 5, to the leading end of the central frame. The articulated shaft 5 is then fitted at the rear end of the horizontal arm of the L-body 6. The parts are rotated about the articulations 1, 3 and 5 with an actuator, i.e. hydraulic cylinder piston devices 8 and 9. A gripping hook 11 is provided at the upper end of the vertical arm 10 of the L-body.

The interchangeable platform 13 is loaded from the ground 12 onto the vehicle by swinging the central frame 4 with the L-bodies 6 backwards about the shaft 3 and by fitting the gripping hook 11 in the gripping loop, i.e. arc 14 located in the upper part of the leading edge of the platform 13. After this, the central frame including its L-bodies is swung back in the front. The curved section of the trajectory of the gripping hook 11 is indicated with a dash line 15. The front end of the trajectory comprises a horizontal section, which is brought about by rotating the L-body about the shaft 5. A corresponding transfer movement can be made also by transferring the L-body telescopically relative to the central frame 4. The interchangeable platform is lowered from the vehicle to the ground in the inverse order.

Figure 1 also shows the tipping position by means of the L-body at the top, the rear and central frame 2 and 4 of the loading assembly being rigidly locked in succession in this position.

The features described above have been disclosed by FI patent specification 86977, for instance.

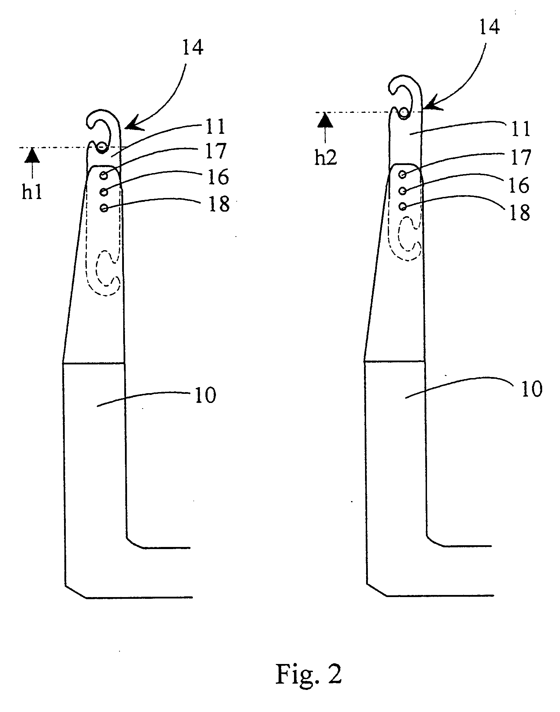

In the assembly of one embodiment of the invention, the double-ended gripping hook 11 is fastened to the upper part of the L-body by means of a transverse axis 16 and one or two transverse locking pins 17 and 18, as shown in figure 2. The shaft 16 of the double-ended gripping hook is placed eccentrically on the longitudinal axis of the gripping hook 11, so that the distances from the shaft to the two jaws of the gripping hook are mutually different. This enables the length of the combination of the upper part 10 of the L-body and the gripping hook 11 to be adapted to that of the platform by simply rotating the position of the gripping hook 11 about its mounting shaft. The double-ended gripping hook 11 is locked into operating position for instance by means of one or two locking pins 17 and 18. The blocking of the locking pins 17 and 18 in the hole can be performed by any known method.

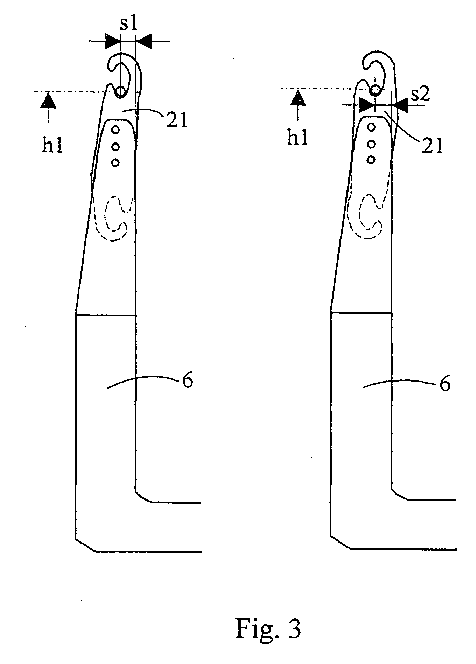

The design of the gripping part 21 shown in figure 3 allows the gripping distance (s₁, s₂) to be altered in the direction of the longitudinal axis of the vehicle, whenever necessary.

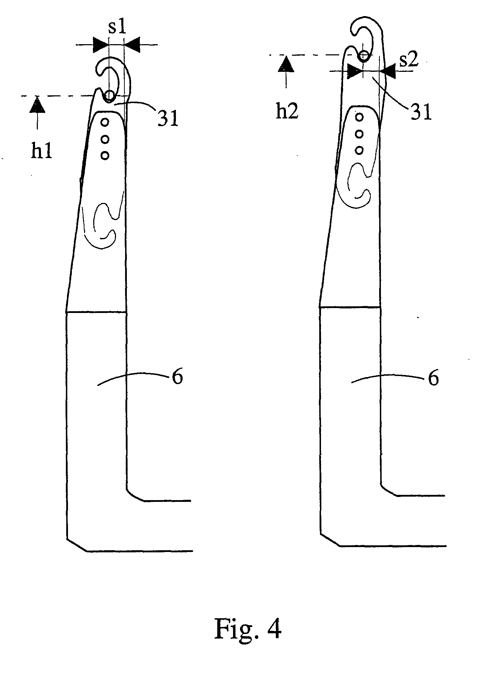

The hook part 31 of figure 4, which has been designed and fastened eccentrically with regard to its longitudinal axis, allows the properties mentioned above to be combined.

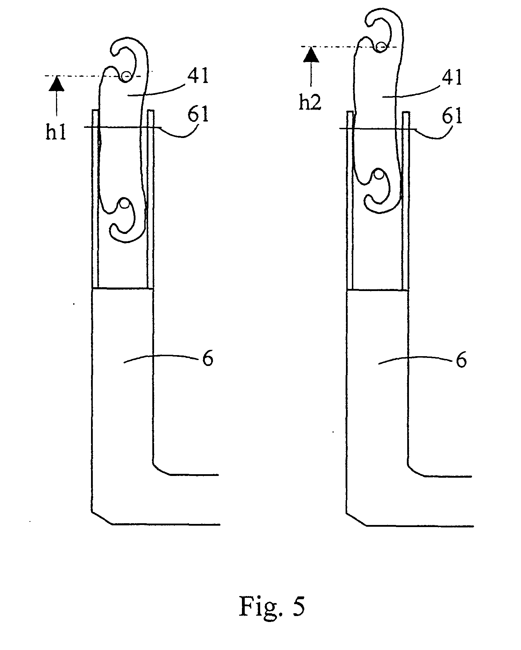

It is also possible to implement the solution for fastening the hook part as in figure 5, and then the hook part 41 is fastened to the L-body 6 with the aid of the shaft 61 parallel to the longitudinal axis of the vehicle.

The terms leading end/rear end, upper end/lower end and vertical part/horizontal part have been used both above and in the following claims. These terms denote the position of these particular parts in the transport position of the loading assembly, i.e. the position of the L-body shown furthest to the left in figure 1. The loading assembly does not necessarily have the embodiment described above, but other known solutions are also conceivable, for instance a loading assembly in which the parts 4 and 6 are mutually connected without any articulation 5, so that a longitudinal movement to the front at the final loading stage is performed with a hydraulic cylinder.

## Claims

1. An assembly for transferring a body (13) to and from a vehicle, the assembly comprising an L-shaped part (6), in which a double-ended gripping hook (11) has been fastened to the upper end of the vertical arm (10), the gripping hook enabling the same loading assembly to be used for transferring varying bodies (13), and whose horizontal arm (7) or its extension (4) comprises a transverse pivoted axle (3) at its rear end, the L-shaped part being rotatable about the pivoted axle by means of an actuator (8), **characterised in that** the double-ended gripping hook (11, 31, 41) is eccentrically fastened to the part (6) so that the gripping arcs (14) are located at different heights (h₁, h₂).

2. An assembly as defined in claim 1, **characterised in that** the double-ended gripping hook (41) is fastened to the part (6) by means of the longitudinal axis (61) of the vehicle (figure 5).

3. An assembly as defined in claim 1 or 2, **characterised in that** the ends of the double-ended gripping hook (21) are shaped such that the gripping distances are at different locations (s₁, s₂) in the longitudinal direction of the vehicle (figures 3 and 4).

4. An assembly as defined in claim 1 or 2, **characterised in that** the double-ended gripping hook (31) is eccentrically fastened to the part (6) such that the gripping arcs (14) are at different heights (h₁, h₂), and that the ends of the double-ended gripping hook have a shape such that the gripping distances are at different locations (s₁, s₂) in the longitudinal direction of the vehicle (figure 4).
